# EUROPEAN PATENT SPECIFICATION

(11) **EP 2 634 023 B1**
(45) Date of publication and mention of the grant of the patent: **02.08.2017**
(21) Application number: 12157810.8
(22) Date of filing: 01.03.2012
(51) Int. Cl.: B60H 1/00, B60H 3/06

(54) **Air intake device of a vehicle interior ventilation system**
Lufteinlassvorrichtung für ein Belüftungssystem eines Fahrzeuginnenraumes
Dispositif d'admission d'air d'un système de ventilation intérieur de véhicule

(43) Date of publication of application: 04.09.2013
(73) Proprietor: Valeo Klimasysteme GmbH, 96476 Bad Rodach (DE)
(72) Inventor: Hopf, Wolfgang, 96342 STOCKHEIM (DE); Gwosdek, Albert, 96342 STOCKHEIM (DE); Haussmann, Roland, 68169 WIESLOCH (DE)
(74) Representative: Metz, Gaëlle

(56) References cited:
- EP-A1- 1 369 270
- EP-A1- 2 078 629
- US-A1- 2007 238 406

## Description

The invention relates to an air intake device of a vehicle-interior ventilation system, in particular of a vehicle air conditioner, and to a vehicle-interior ventilation system itself.

Air intake devices of this type are known from the prior art, the filter maintenance opening being closed by a separate cover which has to be removed for installing and dismantling the filter. Document EP 2 078 629 A1 discloses an air intake device according to the preamble of claim 1. Vehicle-interior ventilation systems are usually arranged in an interior of the vehicle, the available installation space being limited and it therefore possibly being difficult to reach the filter maintenance opening. Here, the fresh air inlet has to be sealed in a complex manner with respect to the surroundings of the interior, in order to avoid an inflow of warm air from the engine compartment.

It is an object of the invention to provide an air intake device of a vehicle-interior ventilation system, which air intake device makes a simple exchange of a filter possible and ensures a satisfactory supply of fresh air.

According to the invention, this object is achieved by an air intake device of a vehicle-interior ventilation system, in particular of a vehicle air conditioner, having a filter chamber which is arranged upstream of a fan blower, and a filter which is arranged in the filter chamber, the filter chamber having a fresh air inlet upstream of the filter and a filter maintenance opening which makes it possible to install and dismantle the filter. The air intake device comprises an air-guiding component which can be dismantled and has a fresh air intake opening, which air-guiding component forms a fresh air duct which extends from the fresh air intake opening to the fresh air inlet of the filter chamber, and which air-guiding component closes the filter maintenance opening by way of a cover section.

Fresh air can be sucked in via the fresh air duct independently of the position of the filter chamber in the vehicle. It can be avoided in this way that, for example, heated air in the engine compartment is sucked in. Since the air-guiding component forms the cover for the filter maintenance opening, a simple exchange of the filter is possible, since no separate, additional cover of the filter maintenance opening has to be mounted and dismantled.

A simple embodiment with a large filter maintenance opening is made possible by the filter maintenance opening extending from the fresh air inlet as far as the fan blower.

The required individual components can be reduced by the air-guiding component forming a mounting for the filter.

For example, the air-guiding component is mounted pivotably, in particular on the filter-chamber wall. This makes simple access to the filter maintenance opening possible by pivoting of the air-guiding component.

The air-guiding component can be connected in a positively locking manner to the filter-chamber wall, preferably by a quick-action locking means. In this way, a reliable connection of the air-guiding component and the filter-chamber wall is ensured, whereas at the same time simple locking and unlocking of the air-guiding component is made possible, preferably without tools.

In order to make an outflow of a liquid in the direction of the fresh air intake opening possible, in the installed state, the fresh air duct can run in the direction from the fresh air intake opening to the filter maintenance opening and preferably constantly upwards to the fresh air inlet.

The air-guiding component can have at least one outflow opening for liquid, which outflow opening connects the filter chamber to the fresh air duct, preferably in such a way that liquid which condenses on the filter can run out through the outflow opening into the fresh air duct.

In order to dewater the fresh air duct, in the installed state, the air-guiding component can have a dewatering opening at the lowermost point of the fresh air duct, which dewatering opening is preferably arranged in a dead water region of the fresh air duct.

The fresh air duct can have a groove-shaped dewatering channel which extends from the outflow opening to the dewatering opening, the dewatering channel preferably having a cover.

It is possible that, in the installed state, the filter is installed such that it is inclined with respect to the horizontal, and the lower end of the filter is arranged at the filter maintenance opening. In this way, the outflow of liquid which condenses on the filter to the filter maintenance opening is ensured.

For example, the filter has a filter frame which has at least one frame opening which makes an outflow of a liquid which condenses in the filter possible, a frame opening being provided for each filter fold, for example.

A recycling duct preferably opens into the filter chamber, which recycling duct can be closed by means of a flap, the flap lying remote from the filter maintenance opening such that, during the dismantling, the filter can be moved such that it is remote from the openings which are assigned to the flap. In this way, the installation and dismantling of the filter is not influenced by the flap.

It is possible that the air-guiding component is configured in such a way that, in the installed state of the ventilation system, the fresh air duct extends through a protective wall of the vehicle, which protective wall separates an interior of the vehicle from the engine compartment, the filter chamber being arranged in the vehicle interior and the fresh air intake opening being arranged outside the vehicle interior.

The air-guiding component preferably extends to a dedicated fresh air intake on the engine bonnet side. It is therefore ruled out that hot engine air is sucked in.

Furthermore, the invention relates to a vehicle-interior ventilation system, in particular a vehicle air conditioner, having an above-described air intake device.

Further features and advantages of the invention result from the following description and from the drawings, to which reference is made and in which:
- Figure 1 shows a vehicle-interior ventilation system according to the invention,
- Figure 2 shows a detailed view of an air intake device according to the invention of the vehicle-interior ventilation system according to Figure 1,
- Figure 3 shows a sectional view of an air intake device according to a first embodiment of the invention,
- Figure 4 shows a sectional view of an air intake device according to a second embodiment of the invention,
- Figure 5 shows a detailed view of an air-guiding component of the air intake device according to Figure 3,
- Figure 6 shows the air-guiding component according to Figure 5 in a dismantled state,
- Figure 7 shows a perspective detailed view of the air-guiding component according to Figure 5,
- Figure 8 shows a detailed view of a filter of an air intake device according to the invention,
- Figure 9 shows a locking element of an air intake device according to the invention,
- Figure 10 shows a housing-side component of a locking assembly of an air intake device according to the invention,
- Figure 11 shows a sectional view of a locking assembly of an air intake device according to the invention,
- Figure 12 shows a sectional view of an air intake device according to a third embodiment of the invention,
- Figure 13 shows a sectional view through the air-guiding component along the sectional plane XIII-XIII of the air intake device according to Figure 12, and
- Figure 14 shows a further embodiment variant of the air-guiding component of the air intake device according to Figure 12.

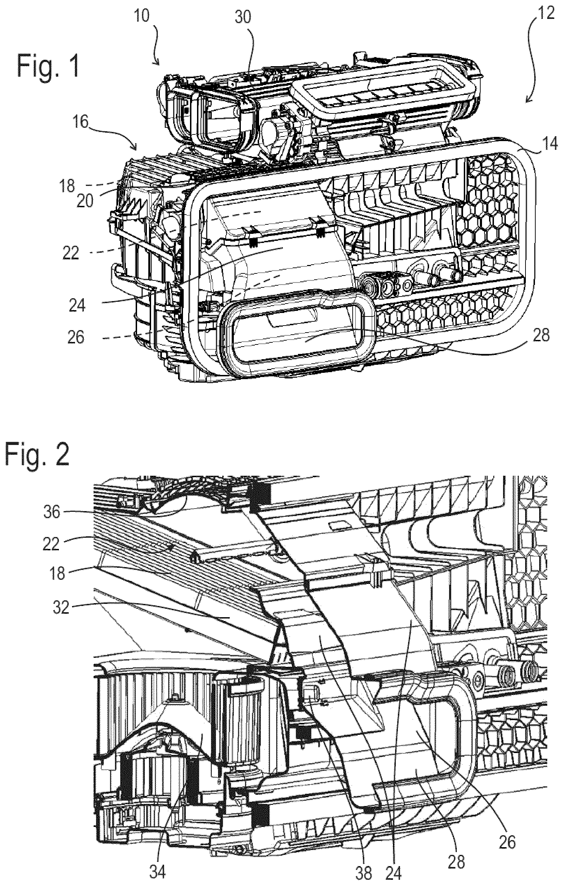

Figure 1 shows a vehicle-interior ventilation system 10 which is arranged in an interior 12 of a vehicle. The interior 12 is separated by a diagrammatically shown protective wall 14 from the engine compartment or another space which is connected to the surroundings of the vehicle. The interior 12 of the vehicle is provided behind the protective wall 14 in the perspective illustration of Figure 1.

The vehicle-interior ventilation system 10 comprises an air intake device 16 which is suitable for sucking fresh air out of the surroundings or a vehicle space which is connected to the surroundings of the vehicle, or recycled air from the vehicle interior. The device 16 is arranged on the left-hand side in the vehicle-interior ventilation system 10 shown.

Furthermore, the vehicle-interior ventilation system 10 comprises an air conditioning device 30 which is configured for cooling, heating and/or for distributing the air which is sucked in to different ventilation outlets which are assigned, for example, to a windscreen or various air outlet nozzles in the vehicle interior.

Figure 2 shows a detailed view of a section through the air intake device 16 of the vehicle-interior ventilation system 10. A filter chamber 18 is provided in the air intake device 16, having a recycling inlet 20 (see Figure 1) and a fresh air inlet 22 which is connected to an air-guiding component 24. The air-guiding component 24 forms a fresh air duct 26 which extends through the protective wall 14 out of the interior 12 of the vehicle and connects the fresh air inlet 22 of the filter chamber 18 to a fresh air intake opening 28.

A filter 32 is provided in the filter chamber 18, which filter 32 is arranged between a fan blower 34 and the recycling inlet 20 or the fresh air inlet 22 and filters the recycled air or fresh air which is sucked in.

A flap 36 is provided which can optionally close the fresh air inlet 22 or the recycling inlet 20 of the filter chamber 18. In the illustration of Figure 2, the recycling inlet 20 of the filter chamber 18 is closed by the flap 36.

The air-guiding component 24 is attached in a manner which can be dismantled to the housing of the air intake device 16. A locking assembly 38 makes positive locking of the air-guiding component 24 to the housing of the air intake device 16 possible.

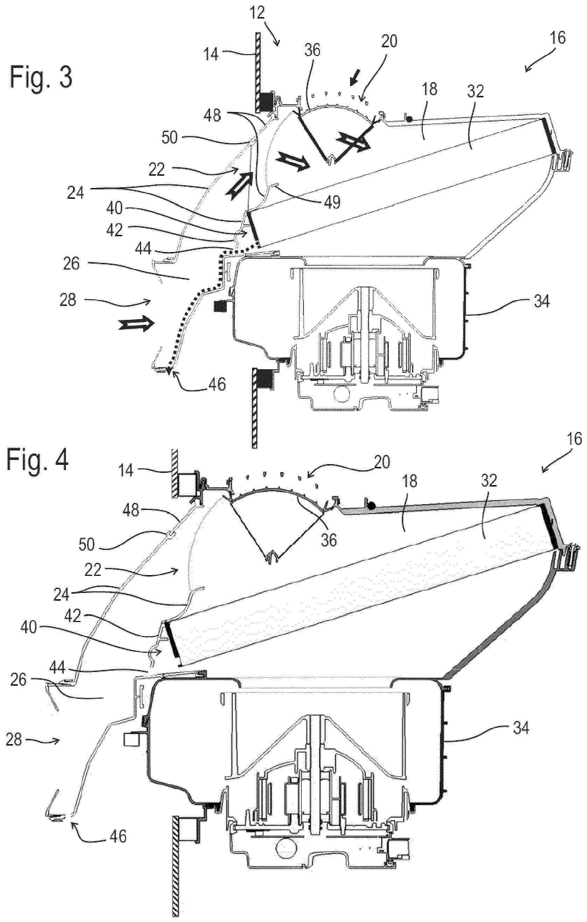

Figure 3 shows a sectional view of the air intake device 16 which, in the selected illustration, is positioned substantially on the right-hand side of the protective wall 14 in the interior 12 of the vehicle, the air intake device 16 being arranged at an opening of the protective wall in a manner which is sealed by a sealing device.

The recycling inlet 20 and the fresh air inlet 22 of the filter chamber 18 are arranged adjacently to one another and in this way can optionally be closed by a flap 36 of compact configuration. Figure 3 shows the flap 36 in a position, in which it closes the recycling inlet 20 completely and opens the fresh air inlet 22 completely.

On account of the compact configuration of the flap 36, the filter 32 can be arranged at a position bellow the flap mechanism, as a result of which the filter 32 can be introduced and removed independently of the position of the flap 36.

The fan blower 34 is arranged bellow the filter chamber 18, which fan blower 34 provides an air flow to the air conditioning device 30 of the vehicle-interior ventilation system 10.

The filter chamber 18 has a filter maintenance opening 40 which makes it possible to install and dismantle the filter 32. For this purpose, the filter 32 can be introduced through the filter maintenance opening 40 into the filter chamber 18 and removed.

The filter maintenance opening 40 is closed by a cover section 42 of the air-guiding component 24. The cover section 42 of the air-guiding component 24 forms an axial mounting for the filter 32, by the section 42 producing an axial stop for the filter 32. In this way, no separate component is required as a cover for the filter maintenance opening 40.

The filter 32 is installed such that it is inclined with respect to the horizontal. On account of the inclination of the filter 32, a liquid which condenses on the filter flows in the direction of the filter maintenance opening 40. At least one outflow opening 44 is provided in the cover section 42 of the air-guiding component 24, which outflow opening 44 connects the filter chamber 18 to the fresh air duct 26, with the result that the liquid can run out through the outflow opening 44 into the fresh air duct 26.

The liquid runs in the fresh air duct 26 to a lowest point, at which the fresh air duct 26 has a dewatering opening 46, through which the liquid can exit the air intake device 16 in a defined manner.

In the embodiment which is shown in Figure 3, the fresh air inlet 22 is formed completely by a fixedly mounted filter-chamber wall 48, 49. In this embodiment, the filter maintenance opening 40 extends from the lower filter-chamber wall 49 of the fresh air inlet 22 on the side of the filter 32 as far as the housing of the fan blower 34.

Figure 4 shows an alternative embodiment, in which the lower section 49 (shown in Fig. 3) of the fresh air inlet 22, which section 49 lies on the side of the filter 32, is formed by the air-guiding component 24 which can be dismantled. When the air-guiding component 24 is dismantled, the fresh air inlet 22 therefore forms a common opening with the filter maintenance opening 40. The installation and dismantling of the filter 32 is facilitated by this large common opening. The further features are identical with the embodiment which is shown in Figure 3.

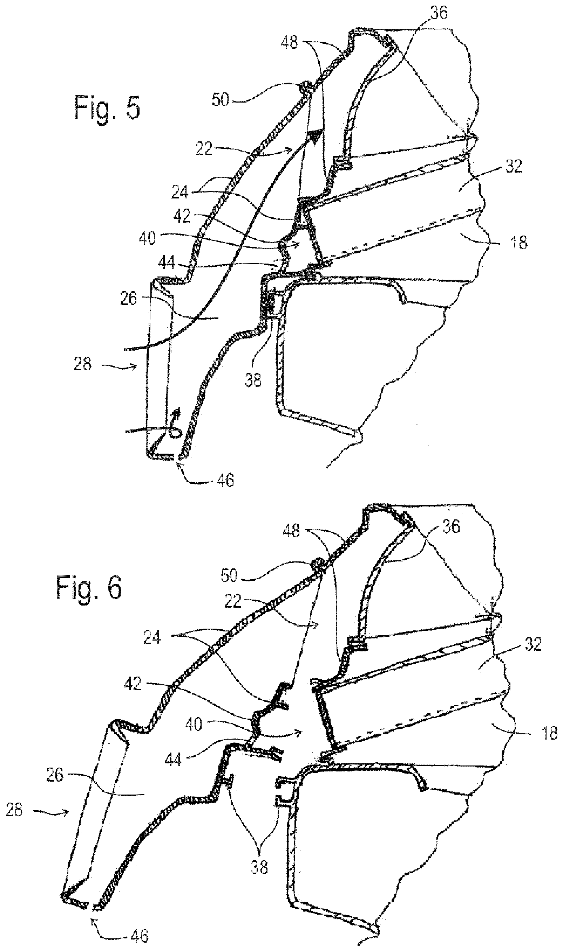

Figure 5 shows a detailed view of the air-guiding component 24 of the air intake device 16 according to Figure 3 in the mounted position. The air-guiding component 24 is mounted on the filter-chamber wall 48 such that it can be pivoted via a pivoting bearing 50. The air-guiding component 24 is fixed in the mounted position by a locking assembly 38.

The locking assembly 38 is configured as a quick-action locking means and is arranged in such a way that it can be reached in a simple way from the fresh air intake opening 28 of the fresh air duct 26 and can preferably be opened and closed manually without additional tools.

When the locking assembly 38 is open, the air-guiding component 24 can be pivoted out of its mounting position, as shown in Figure 6. In the pivoted-out position, the connection of the air-guiding component 24 and the filter-chamber wall 48 on the pivoting bearing 50 can be released and the air-guiding component 24 can be removed completely. In this way, the filter maintenance opening 40 is opened completely and a simple exchange of the filter 32 is made possible.

As can be seen readily in Figure 6, projections are provided on the air-guiding component 24 or on the filter-chamber wall 48 or corresponding other housing parts of the air intake device 16, which projections engage into one another in the mounted position of the air-guiding component 24 and form a seal of the filter chamber 18. The seal can be configured as a labyrinth seal or can be formed by separate or integrally formed sealing elements.

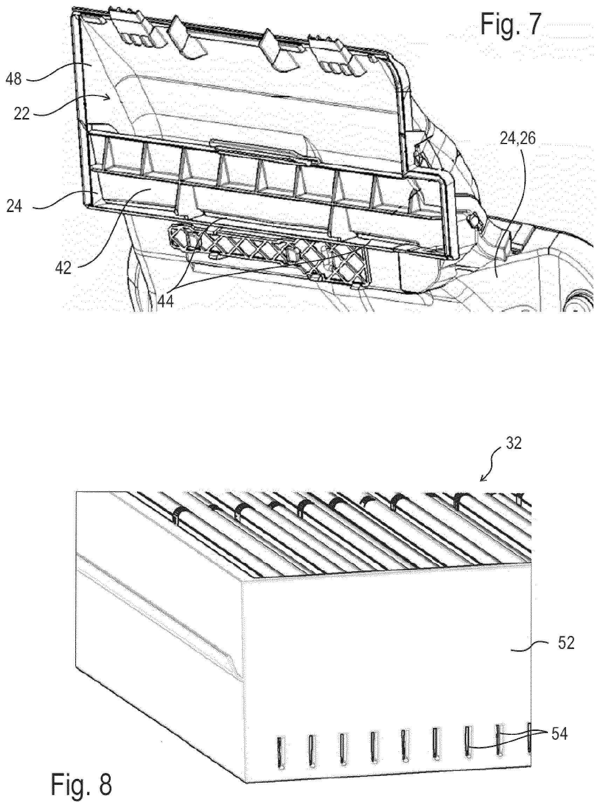

Figure 7 shows a perspective rear view of the air-guiding component 24 and the adjoining filter-chamber wall 48 from the side of the filter chamber 18. In the embodiment which is shown, the cover section 42 has two outflow openings 44.

The air-guiding component 24 is configured in such a way that, in the installed state in the vehicle, it extends to a dedicated fresh air intake on the engine bonnet side. In this way, fresh air is sucked in via the fresh air intake and the air-guiding component 24, and the intake of air which has already been heated from the interior or the engine compartment can be avoided.

The arrangement which is shown in the figures is advantageous, in particular, in trucks, in which the driver's cab is arranged above the engine compartment.

Figure 8 shows a detailed view of the filter 32. The filter 32 has a filter frame 52, in which the filter material is received. The filter 32 is produced from a hydrophobic material and forms a plurality of filter folds. A frame opening 54 is provided in the filter frame 52 at each filter fold, through which frame opening 54 the liquid which condenses in the filter can run out. As an alternative, it is possible that a frame opening is assigned to a plurality of filter folds.

The liquid in the filter material can accumulate on account of droplets and aerosols transported in the air flow or as a result of condensation on the filter material.

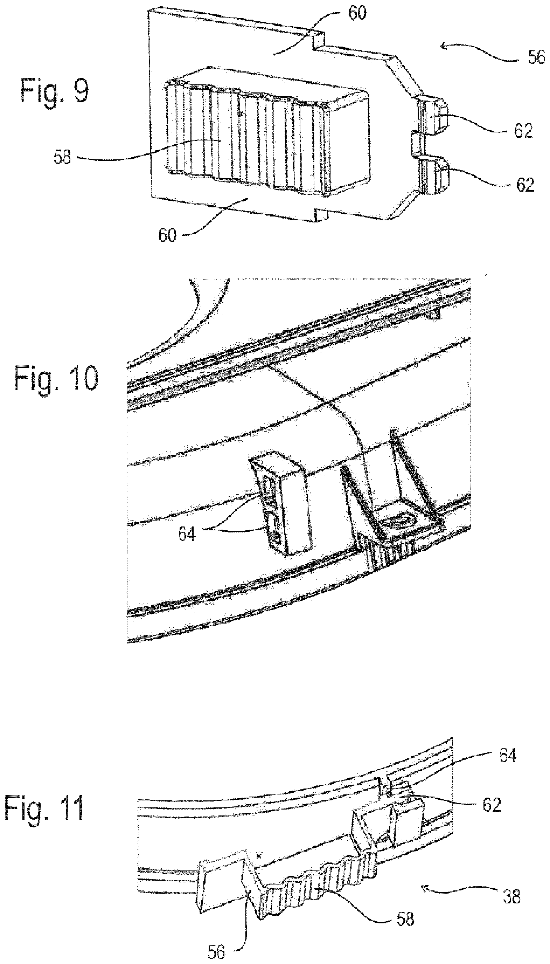

In the following text, the locking assembly 38 will be described using Figures 9 to 11. The locking assembly 38 forms a quick-action locking means which can be actuated manually without an additional tool. Figure 9 shows a locking element 56, having a profiled actuating region 58, a guide projection 60 and two locking projections 62. The guide projections 60 make it possible to mount the locking element 56 on the air-guiding component 24 and to displace the locking element 56 linearly in the direction of the locking projections 62 relative to the air-guiding component 24 and the corresponding housing part of the air intake device 16.

Figure 10 shows the housing component of the air intake device 16 with a projection, in which two locking recesses 64 are provided.

Figure 11 shows a sectional view through the locking assembly 38 in its locked position, the locking element 56 engaging with the locking projections 62 into the locking recesses 64 of the housing projection. In this way, a positively locking connection is produced which prevents pivoting of the air-guiding component 24 about the pivoting bearing 50.

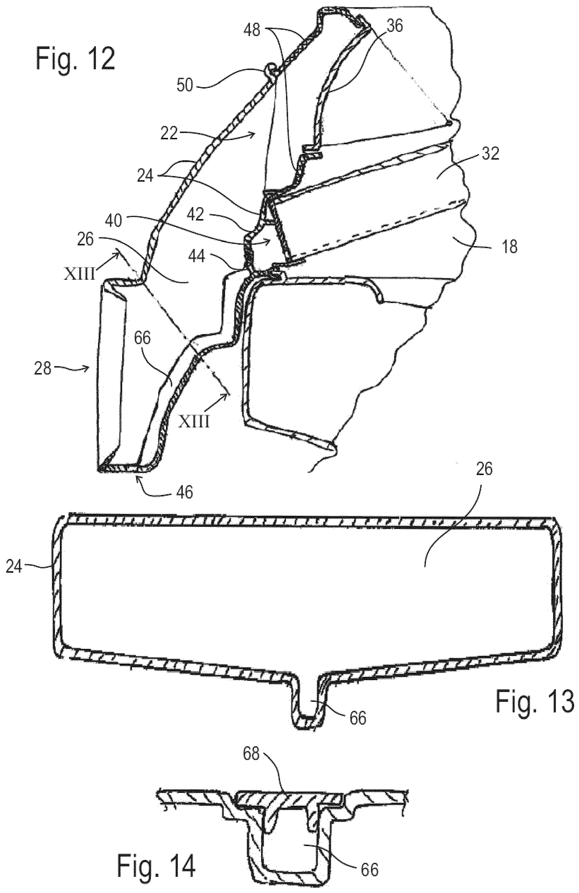

A further embodiment of the air intake device 16 is shown in Figures 12 and 13. In the embodiment which is shown, a central outflow opening 44 is provided in the cover section 42 of the air-guiding component 24, which outlet opening 44 opens into a groove-shaped dewatering channel 66. The dewatering channel 66 extends from the outflow opening 44 to the dewatering opening 46. Figure 13 shows the cross section of the fresh air duct 26 with the groove-shaped dewatering channel 66. It is also possible that a plurality of outflow openings 44 are provided with a corresponding plurality of dewatering channels 66, or that a plurality of outflow openings 44 open into a common dewatering channel 66.

In an alternative embodiment according to Figure 14, the dewatering channel 66 has a cover 68. In this way, the flow of the liquid in the dewatering channel 66 is substantially independent of the air flow conditions in the fresh air duct 26. The cover 68 is configured in such a way that it bears flushly against the wall of the fresh air duct 26.

## Claims

1. Air intake device (16) of a vehicle-interior ventilation system (10), in particular of a vehicle air conditioner,
having a filter chamber (18) which is arranged upstream of a fan blower (34), and a filter (32) which is arranged in the filter chamber (18), the filter chamber (18) having a fresh air inlet (22) upstream of the filter (32) and a filter maintenance opening (40) which makes it possible to install and dismantle the filter (32),
and an air-guiding component (24) which can be dismantled **characterized in that**
the air-guiding component has a fresh air intake opening (28), which air-guiding component (24) forms a fresh air duct (26) which extends from the fresh air intake opening (28) to the fresh air inlet (22) of the filter chamber (18), and which air-guiding component (24) closes the filter maintenance opening (40) by way of a cover section (42).

2. Air intake device (16) according to Claim 1, **characterized in that** the filter maintenance opening (40) extends from the fresh air inlet (22) as far as the fan blower (34).

3. Air intake device (16) according to Claim 1 or 2, **characterized in that** the air-guiding component (24) forms a mounting for the filter (32).

4. Air intake device (16) according to one of the preceding claims, **characterized in that** the air-guiding component (24) is mounted pivotably, in particular on the filter-chamber wall (48).

5. Air intake device (16) according to one of the preceding claims, **characterized in that** the air-guiding component (24) is connected in a positively locking manner to the filter-chamber wall (48), preferably by a quick-action locking means.

6. Air intake device (16) according to one of the preceding claims, **characterized in that**, in the installed state, the fresh air duct (26) runs in the direction from the fresh air intake opening (28) to the filter maintenance opening (40) and preferably constantly upwards to the fresh air inlet (22).

7. Air intake device (16) according to one of the preceding claims, **characterized in that** the air-guiding component (24) has at least one outflow opening (44) for liquid, which outflow opening (44) connects the filter chamber (18) to the fresh air duct (26), preferably in such a way that liquid which condenses on the filter (32) can run out through the outflow opening (44) into the fresh air duct (26).

8. Air intake device (16) according to one of the preceding claims, **characterized in that**, in the installed state, the air-guiding component (24) has a dewatering opening (46) at the lowermost point of the fresh air duct (26), which dewatering opening (46) is preferably arranged in a dead water region of the fresh air duct (26).

9. Air intake device (16) according to Claims 7 and 8, **characterized in that** the fresh air duct (26) has a groove-shaped dewatering channel (66) which extends from the outflow opening (44) to the dewatering opening (46), the dewatering channel (66) preferably having a cover (68).

10. Air intake device (16) according to one of the preceding claims, **characterized in that**, in the installed state, the filter (32) is installed such that it is inclined with respect to the horizontal, and the lower end of the filter (32) is arranged at the filter maintenance opening (40).

11. Air intake device (16) according to one of the preceding claims, **characterized in that** the filter (32) has a filter frame (52) which has at least one frame opening (54) which makes an outflow of a liquid which condenses in the filter (32) possible, a frame opening (54) preferably being provided for each filter fold.

12. Air intake device (16) according to one of the preceding claims, **characterized in that** a recycling duct opens into the filter chamber (18), which recycling duct can be closed by means of a flap (36), the flap (36) lying remote from the filter maintenance opening (40) such that, during the dismantling, the filter (32) can be moved such that it is remote from the openings (20, 22) which are assigned to the flap (36).

13. Vehicle-interior ventilation system (10), in particular vehicle air conditioner, having an air intake device (16) according to one of the preceding claims.

14. Vehicle-interior ventilation system (10) according to claim 13 with the air-guiding component (24) being configured in such a way that, in the installed state of the ventilation system (10), the fresh air duct (26) extends through a protective wall (14) of the vehicle, which protective wall (14) separates an interior (12) of the vehicle from the engine compartment, the filter chamber (18) being arranged in the vehicle interior (12) and the fresh air intake opening (28) being arranged outside the vehicle interior (12).

15. Vehicle-interior ventilation system (10) according to claim 14 **characterized in that** the air-guiding component (24) extends to a dedicated fresh air intake on the engine bonnet side.

## Patentansprüche

1. Luftansaugvorrichtung (16) einer Fahrzeuginnenraumbelüftungsanlage (10), insbesondere einer Fahrzeugklimaanlage,
mit einer Filterkammer (18), die stromaufwärts eines Lüftergebläses (34) angeordnet ist, und einem Filter (32), der in der Filterkammer (18) angeordnet ist, wobei die Filterkammer (18) einen Frischlufteinlass (22) stromaufwärts des Filters (32) und eine Filterinstandhaltungsöffnung (40) aufweist, die einen Ein- und Ausbau des Filters (32) ermöglicht,
sowie einem demontierbaren Luftführungsbauteil (24),
**dadurch gekennzeichnet, dass** das Luftführungsbauteil eine Frischluftansaugöffnung (28) aufweist, wobei das Luftführungsbauteil (24) einen Frischluftkanal (26) bildet, der sich von der Frischluftansaugöffnung (28) zum Frischlufteinlass (22) der Filterkammer (18) erstreckt, und wobei das Luftführungsbauteil (24) mit einem Abdeckungsabschnitt (42) die Filterinstandhaltungsöffnung (40) verschließt.

2. Luftansaugvorrichtung (16) nach Anspruch 1, **dadurch gekennzeichnet, dass** sich die Filterinstandhaltungsöffnung (40) vom Frischlufteinlass (22) bis zum Lüftergebläse (34) erstreckt.

3. Luftansaugvorrichtung (16) nach Anspruch 1 oder 2, **dadurch gekennzeichnet, dass** das Luftführungsbauteil (24) eine Lagerung für den Filter (32) bildet.

4. Luftansaugvorrichtung (16) nach einem der vorhergehenden Ansprüche, **dadurch gekennzeichnet, dass** das Luftführungsbauteil (24) schwenkbar gelagert ist, insbesondere an der Filterkammerwand (48).

5. Luftansaugvorrichtung (16) nach einem der vorhergehenden Ansprüche, **dadurch gekennzeichnet, dass** das Luftführungsbauteil (24) formschlüssig mit der Filterkammerwand (48) verbunden ist, vorzugsweise durch eine Schnellverriegelung.

6. Luftansaugvorrichtung (16) nach einem der vorhergehenden Ansprüche, **dadurch gekennzeichnet, dass** der Frischluftkanal (26) im eingebauten Zustand in Richtung von der Frischluftansaugöffnung (28) zur Filterinstandhaltungsöffnung (40) und vorzugsweise zum Frischlufteinlass (22) stetig nach oben verläuft.

7. Luftansaugvorrichtung (16) nach einem der vorhergehenden Ansprüche, **dadurch gekennzeichnet, dass** das Luftführungsbauteil (24) zumindest eine Ablauföffnung (44) für Flüssigkeit aufweist, welche die Filterkammer (18) mit dem Frischluftkanal (26) verbindet, vorzugsweise so, dass am Filter (32) niedergeschlagene Flüssigkeit durch die Ablauföffnung (44) in den Frischluftkanal (26) ablaufen kann.

8. Luftansaugvorrichtung (16) nach einem der vorhergehenden Ansprüche, **dadurch gekennzeichnet, dass** das Luftführungsbauteil (24) im eingebauten Zustand an der untersten Stelle des Frischluftkanals (26) eine Entwässerungsöffnung (46) aufweist, welche vorzugsweise in einem Totwasserbereich des Frischluftkanals (26) angeordnet ist.

9. Luftansaugvorrichtung (16) nach Anspruch 7 und 8, **dadurch gekennzeichnet, dass** der Frischluftkanal (26) einen nutförmigen Entwässerungskanal (66) aufweist, welcher sich von der Ablauföffnung (44) zur Entwässerungsöffnung (46) erstreckt, wobei der Entwässerungskanal (66) vorzugsweise eine Abdeckung (68) aufweist.

10. Luftansaugvorrichtung (16) nach einem der vorhergehenden Ansprüche, **dadurch gekennzeichnet, dass** der Filter (32) im eingebauten Zustand zur Horizontalen geneigt eingebaut ist und das untere Ende des Filters (32) an der Filterinstandhaltungsöffnung (40) angeordnet ist.

11. Luftansaugvorrichtung (16) nach einem der vorhergehenden Ansprüche, **dadurch gekennzeichnet, dass** der Filter (32) einen Filterrahmen (52) aufweist, welcher zumindest eine Rahmenöffnung (54) aufweist, die ein Ablaufen einer im Filter (32) niedergeschlagenen Flüssigkeit ermöglicht, wobei vorzugsweise für jede Filterfalte eine Rahmenöffnung (54) vorgesehen ist.

12. Luftansaugvorrichtung (16) nach einem der vorhergehenden Ansprüche, **dadurch gekennzeichnet, dass** ein Umluftkanal in die Filterkammer (18) mündet, der mittels einer Klappe (36) schließbar ist, wobei die Klappe (36) so entfernt von der Filterinstandhaltungsöffnung (40) liegt, dass der Filter (32) beim Ausbau entfernt von den der Klappe (36) zugeordneten Öffnungen (20, 22) bewegbar ist.

13. Fahrzeuginnenraumbelüftungsanlage (10), insbesondere Fahrzeugklimaanlage, mit einer Luftansaugvorrichtung (16) gemäß einem der vorhergehenden Ansprüche.

14. Fahrzeuginnenraumbelüftungsanlage (10) nach Anspruch 13, wobei das Luftführungsbauteil (24) so ausgebildet ist, dass sich der Frischluftkanal (26) im eingebauten Zustand der Belüftungsanlage (10) durch eine Schutzwand (14) des Fahrzeugs erstreckt, welche einen Innenraum (12) des Fahrzeugs zum Motorraum abgrenzt, wobei die Filterkammer (18) im Fahrzeuginnenraum (12) und die Frischluftansaugöffnung (28) außerhalb des Fahrzeuginnenraums (12) angeordnet ist.

15. Fahrzeuginnenraumbelüftungsanlage (10) nach Anspruch 14, **dadurch gekennzeichnet, dass** sich das Luftführungsbauteil (24) zu einem eigenen, motorhaubenseitigen Frischluftzugang erstreckt.

## Revendications

1. Dispositif d'admission d'air (16) pour un système de ventilation d'habitacle de véhicule (10), en particulier pour un dispositif de climatisation de véhicule,
comportant une chambre de filtre (18) qui est placée en amont d'un ventilateur de soufflage (34), et un filtre (32) qui est placé dans la chambre de filtre (18), la chambre de filtre (18) comportant une entrée d'air frais (22) en amont du filtre (32) et une ouverture d'entretien de filtre (40) qui permet d'installer et de démonter le filtre (32),
et un composant de guidage d'air (24) qui peut être démonté,
**caractérisé en ce que**
le composant de guidage d'air comporte une ouverture d'admission d'air frais (28), ledit composant de guidage d'air (24) formant un conduit à air frais (26) qui s'étend de l'ouverture d'admission d'air frais (28) à l'entrée d'air frais (22) de la chambre de filtre (18), et ledit composant de guidage d'air (24) fermant l'ouverture d'entretien de filtre (40) au moyen d'une section formant couvercle (42).

2. Dispositif d'admission d'air (16) selon la revendication 1, **caractérisé en ce que** l'ouverture d'entretien de filtre (40) s'étend de l'entrée d'air frais (22) jusqu'au ventilateur de soufflage (34).

3. Dispositif d'admission d'air (16) selon la revendication 1 ou 2, **caractérisé en ce que** le composant de guidage d'air (24) forme un support pour le filtre (32).

4. Dispositif d'admission d'air (16) selon l'une des revendications précédentes, **caractérisé en ce que** le composant de guidage d'air (24) est monté à pivotement, en particulier sur la paroi (48) de la chambre de filtre.

5. Dispositif d'admission d'air (16) selon l'une des revendications précédentes, **caractérisé en ce que** le composant de guidage d'air (24) est raccordé à la façon d'un verrouillage par engagement géométrique à la paroi (48) de la chambre de filtre, de préférence par le biais d'un moyen de verrouillage rapide.

6. Dispositif d'admission d'air (16) selon l'une des revendications précédentes, **caractérisé en ce que**, à l'état installé, le conduit à air frais (26) s'étend dans la direction allant de l'ouverture d'admission d'air frais (28) à l'ouverture d'entretien de filtre (40) et, de préférence, en montant de façon constante jusqu'à l'entrée d'air frais (22).

7. Dispositif d'admission d'air (16) selon l'une des revendications précédentes, **caractérisé en ce que** le composant de guidage d'air (24) comporte au moins une ouverture d'écoulement sortant (44) pour du liquide, ladite ouverture d'écoulement sortant (44) raccordant la chambre de filtre (18) au conduit à air frais (26), de préférence de telle sorte que du liquide qui se condense sur le filtre (32) puisse s'écouler et sortir à travers l'ouverture d'écoulement sortant (44) dans le conduit à air frais (26).

8. Dispositif d'admission d'air (16) selon l'une des revendications précédentes, **caractérisé en ce que**, à l'état installé, le composant de guidage d'air (24) comporte une ouverture d'évacuation d'eau (46) au niveau du point le plus bas du conduit à air frais (26), ladite ouverture d'évacuation d'eau (46) étant de préférence placée dans une région d'eau stagnante du conduit à air frais (26).

9. Dispositif d'admission d'air (16) selon la revendication 7 ou 8, **caractérisé en ce que** le conduit à air frais (26) comporte un canal d'évacuation d'eau sous forme de rainure (66) qui s'étend de l'ouverture d'écoulement sortant (44) à l'ouverture d'évacuation d'eau (46), le canal d'évacuation d'eau (66) comportant de préférence un couvercle (68).

10. Dispositif d'admission d'air (16) selon l'une des revendications précédentes, **caractérisé en ce que**, à l'état installé, le filtre (32) est installé de telle sorte qu'il soit incliné par rapport à l'horizontale, et que l'extrémité inférieure du filtre (32) soit placée au niveau de l'ouverture d'entretien de filtre (40).

11. Dispositif d'admission d'air (16) selon l'une des revendications précédentes, **caractérisé en ce que** le filtre (32) comporte un cadre de filtre (52) qui comporte au moins une ouverture de cadre (54) qui permet un écoulement sortant d'un liquide qui se condense dans le filtre (32), une ouverture de cadre (54) étant de préférence prévue pour chaque pli de filtre.

12. Dispositif d'admission d'air (16) selon l'une des revendications précédentes, **caractérisé en ce qu'**un conduit de recyclage débouche dans la chambre de filtre (18), ledit conduit de recyclage pouvant être fermé au moyen d'un volet (36), le volet (36) étant situé à distance de l'ouverture d'entretien de filtre (40) de telle sorte que, lors du démontage, le filtre (32) puisse être déplacé de telle sorte qu'il se trouve à distance des ouvertures (20, 22) qui sont associées au volet (36).

13. Système de ventilation d'habitacle de véhicule (10), en particulier dispositif de climatisation de véhicule, comportant un dispositif d'admission d'air (16) selon l'une des revendications précédentes.

14. Système de ventilation d'habitacle de véhicule (10) selon la revendication 13, le composant de guidage d'air (24) étant configuré de telle sorte que, à l'état installé du système de ventilation (10), le conduit à air frais (26) s'étende à travers une paroi de protection (14) du véhicule, ladite paroi de protection (14) séparant un habitacle (12) du véhicule du compartiment moteur, la chambre de filtre (18) étant placée dans l'habitacle (12) du véhicule et l'ouverture d'admission d'air frais (28) étant placée à l'extérieur de l'habitacle (12) du véhicule.

15. Système de ventilation d'habitacle de véhicule (10) selon la revendication 14, **caractérisé en ce que** le composant de guidage d'air (24) s'étend jusqu'à une admission d'air frais spécifique du côté du capot du moteur.
